# EUROPEAN PATENT SPECIFICATION

(11) **EP 1 422 270 B1**
(45) Date of publication and mention of the grant of the patent: **28.12.2005**
(21) Application number: 03021488.6
(22) Date of filing: 23.09.2003
(51) Int. Cl.: C09D 7/00, C09D 11/06, C09D 11/10, D06P 1/52

(54) **Method for producing a print thickener composition**
Produktionsmethode für eine Druckverdickungszusammensetzung
Proccédé de fabrication pour une compsition d'impression depilatoire

(30) Priority: 22.11.2002 US 302141
(43) Date of publication of application: 26.05.2004
(73) Proprietor: CHT R. Beitlich Corporation, Charlotte, North Carolina 28217 (US)
(72) Inventor: Kernels, Boby R., Gaffney South Carolina 29340 (US)
(74) Representative: Schoppe, Fritz

(56) References cited:
- EP-A- 0 776 690
- US-A- 5 981 625
- US-B1- 6 203 720

## Description

### BACKGROUND OF THE INVENTION

### 1) Field of The Invention

The present invention relates to a method for making print thickener composition. The thickener is used in printing compositions having inks, dyes and/or pigments. The printing composition is printed on textile material to provide color and design. In particular, the thickener composition is added to the printing composition containing ink, dye or pigment such that it has the proper viscosity and print characteristics to adequately print on textile goods of all types of construction. The amount of print thickener employed by those skilled in the art is primarily a matter of trial and error. Trial and error is necessary because inks, pigments and dyes have a wide variety of characteristics that influence the print paste. More specific, the print thickener composition of the present invention comprises vegetable oil with or without mineral oil, polyacrylic acid (and/or acrylic copolymers), alkali material, and optionally antioxidant.

### 2) Prior Art

Thickeners for ink, dyes and pigments are known. Applying ink, dyes, or pigments via printing on textiles is also known.

U. S. Patent 4,289,678 to Calder et al. discloses an acrylic copolymer as a thickener for inks. The inks are typically employed for printing newspapers.

U. S. Patent 4,666,974 to Keskey et al. discloses an antioxidant thickening composition. The composition includes ammonium hydroxide to adjust the PH. It is disclosed that the PH adjustment thickens the medium. It is also disclosed that the thickeners of this invention are useful as coatings for textiles, among other products.

U. S. Patent 5,861,456 to Berte' et al. discloses thickening compositions for inks which include acrylic acid polymers neutralized with ammonia.

It is also known to use mineral oil in thickener compositions for inks. The problem with employing mineral oil in such compositions is that the printing equipment is usually operated at elevated temperatures like 325° F and above, causing volatiles from the mineral oil to be released. These volatile organic compounds create a health hazard for employees and hazards for the environment.

Thus there is a need to develop a thickener composition for inks which is not a health or environmental hazard when printing at elevated temperatures. Accordingly there is a need for a thickener that has no or extremely low VOC (Volatile Organic Carbons) at high temperature.

### SUMMARY OF THE INVENTION

The present invention provides a method of making a thickener, the method comprising the steps of mixing vegetable oil, and polyacrylic acid together to form a preblend and bubbling vaporous ammonia through said preblend.

### DESCRIPTION OF THE PREFERRED EMBODIMENTS

The thickener composition of the present invention is very shelf stable, has no or low VOC's, has improved color enhancement, and yields softness to the textile article to which it is applied, as a part of a printing composition. Most of these characteristics are provided by the vegetable oil.

For cost considerations, it may be desirable to replace a portion of the vegetable oil with mineral oil. However, the VOC's may increase in those printing systems that operate between 150 - 400° F, thus causing operator health concerns, environmental pollution possibility, and smoke or fume production.

The present invention may be produced from a variety of vegetables oils, namely: cottonseed oil, linseed oil, corn oil, coconut oil, babassu oil, olive oil, tung oil, peanut oil, safflower oil, sunflower oil, perilla oil, oiticica oil, palm oil, canola oil, soybean oil, or mixtures of these. A portion of the vegetable oil may be replaced with mineral oil such as paraffin oil, or silicone oil, or a mixture of these. Up to 50% of the vegetable oil may be replaced by the mineral oil. Particularly preferred vegetable oil is canola oil.

The vegetable oil generally comprises from 25 to 75% by weight of the thickener composition. Preferably the vegetable oil comprises from 30 - 65% by weight of the thickener composition. Up to 50% of the vegetable oil can be replaced by mineral oil.

Suitable polyacrylic acids useful in the present invention are polyacrylic acid, and acrylic copolymers as well as a mixture of these. These include methacrylic acid, methylacrylate, methylmethacrylate, ethyl acrylate, propyl acrylate, butyl acrylate, ethyl methyl methacrylate, propyl methacrylate, butyl methacrylate, 2-ethylhexyl acrylate, 2-hydroxyethylacrylate, 2-hydroxybutyl methacrylate, 2-ethylhexyl methacrylate, 2-hydroxy ethyl methacrylate, acrylamide, and mixtures of these. Small amounts of other compatible, copolymers, monomers/polymers may also present.

The polyacrylic acid polymer/copolymer generally comprises from 20 - 70 wt. % of the thickener composition. Preferably the acrylic acid polymer or copolymer comprises from 40 - 65 wt. % of the thickener composition.

Suitable antioxidants for the present invention are organic compounds which retard oxidation, deterioration, rancidity, and gum formation. Antioxidants are usually, but optionally, added to preserve the vegetable oil. Oxygen prefers to react with antioxidants rather than vegetable oil, thereby preventing it from spoiling, becoming rancid, and developing a repulsive odor. Typical antioxidants are based on amine compounds, phosphites, sulfides, metal salts, and phenol or phenolic compounds. Phenolic compounds are preferred because of their tendency not to stain or discolor the textile, thereby allowing the desired ink, dyes, or pigment to properly color the textile. Preferred are butylated hydroxylanisole (BNA), and particularly butylated hydroxyl toluene (BHT).

The antioxidant comprises from 0.5 - 3 wt. % based on the thickener, and more preferably a range from 0.5 - 2 wt. % of the total weight of the thickener.

Sufficient quantities of alkali material are required to raise the pH of the hydrated "acid" polymer or copolymer to a level where the polymer achieves its highest thickening efficiency. The acrylic acid polymer or copolymers have a range of acidity (some weak acidity levels and some stronger acidity levels). The amount and type of alkali material is optional. The alkali material should bring the thickener composition to a pH between 5 and 13, preferably 6 - 9. The alkali material may be alkaline metal compounds such as alkaline metal oxides or hydroxides. Typical alkali materials are sodium hydroxide, lithium hydroxide, ammonia, ammonium hydroxide, amines, potassium hydroxide, etc. The alkali material could also be a mixture of any of these. Of these, anhydrous ammonia is preferred.

To achieve a pH in the range of 5 - 13, the thickener composition usually has from 3 - 25 wt. % alkali material. Preferably the amount of alkali material is in a range of 5 - 10 weight percent, based on the total weight of the thickener.

Other optional components may be added to the thickener composition such as rheological modifiers such as montmorillonite, or clays like bentonite; emulsifiers like sodium dodecyl benzene sulfonate, sodium dioctylsulfosuccinate, and sodium lauryl sulfate; extenders like talc, calcium carbonate, silica, and the like; and enhancing agents like chelating compounds, chain enhancing agents, etc. These other optional components are well known to those skilled in the art and, if present in the thickener composition, rarely exceed 10% by weight, and usually not more than 4 - 8% by weight, based on the weight of the thickener composition.

The thickener composition has a very stable shelf life which is believed to be the benefit of the method or technique in which it is made. First, one or more vegetable oils with or without mineral oil are blended with any optional component like the antioxidant, emulsifiers, etc. Then the polyacrylic acid or acrylic copolymer is blended with the vegetable oil (or vegetable composition) until uniformly dispersed. If it is necessary to adjust the pH, the alkali material is added at a rate that avoids excessive heat generation, until the desired pH is achieved. The components are mixed at ambient conditions and once thoroughly mixed, may be stored at ambient conditions without the use of an inert gaseous headspace.

Typical print compositions have ink, dye or pigment additives, a binder and a thickener. The thickener of the present invention is generally employed in a range of 1 to 7% by weight of the print composition. The ink, dye or pigment may consist of 0.01 to 30% by weight of the print composition, the binder may consist of from 3 to 40% by weight of the print composition, the thickener is added in the range stated above, and the balance being water to a total of 100%. More preferably, the present thickener composition is employed in a range of 2 to 3% by weight based on the total weight of the print composition.

The thickener composition of the present invention is blended uniformly with the printing composition at ambient temperature and pressure.

### EXAMPLES

For purposes of illustration and understanding, the following examples exemplify the present invention.

| | | |
|---|---|---|
| Example # 1 | 45% to 61% | Vegetable Oil, Rape Seed or Canola |
| | 3% to 5% | Rheological Modifier, bentonite, montmorillonite |
| | 4% to 4% | Lipophilic emulsifier |
| | 25% to 35% | Acrylic mono, co, or terpolymer |
| | 5% to 15% | Anhydrous Ammonia |
| | | |
| Example #2 | 30% to 35% | Vegetable Oil, Rape Seed or Canola |
| | 6% to 10% | Mineral Oil |
| | 3% to 5% | Rheological Modifier, bentonite |
| | 1 % to 2% | Lipophilic emulsifier |
| | 41 % to 44% | Acrylic mono, co, or terpolymer |
| | 5% to 15% | Anhydrous Ammonia |
| | 1 % to 2% | Hydrophilic Emulsifier |
| | | |
| Example #3 | 10% to 15% | Mineral Oil |
| | 32% to 35% | Vegetable Oil, Rape seed or Canola |
| | 2% to 5% | Lipophilic Emulsifier |
| | 42% to 45% | Acrylic mono, co, or terpolymer |
| | 6% to 8% | Anhydrous Ammonia |
| | | |
| Example #4 | 33% to 45% | Vegetable Oil, Rape Seed or Canola |
| | 45% to 60% | Acrylic mono, co, or terpolymer |
| | 0.5% to 2.0% | Antioxidant, Butylated Hydroxy Toluene (BHT) |
| | 6% to 8% | Anhydrous Ammonia |

### MIXING PROCEDURE

1. Add the medium oil or oils to the vessel.
2. Add the kaolin-clay to achieve desired viscosity of the oil.
3. Add the antioxidant to the oil and stir until dissolved.
4. Add any desired lipophilic emulsifier to this mixture and stir until uniformly blended or dissolved.
5. Add the polymer to the vessel and stir until uniformly dispersed.
6. Add the alkali material in sufficient quantity to yield the desired pH and at a rate that avoids excessive heat generation.
7. Add any desired hydrophilic emulsifier.

Each of the above Examples would have a VOC percentage of 0.0% upon subtracting the alkali material. Printing a composition containing the ink, dye, or pigment, (0.01 - 30 wt. %); binder, (3 - 40 wt. %); thickener of the present invention, (1-7 wt %); and water to 100%, on a cotton woven fabric and then drying at 400° F will show no smoke.

## Claims

1. A method of making a thickener comprising: mixing vegetable oil, and polyacrylic acid together to form a preblend, and bubbling vaporous ammonia through said preblend.

2. The method of claim 1, where said preblend also contains an antioxidant.

3. The method of claim 1, wherein said vegetable oil is selected from the group consisting of cottonseed, linseed, corn, coconut, babassu, olive, tung, peanut, safflower, sunflower, perilla, oiticica, palm, canola, soybean oils and a mixture of these.

4. The method of claim 1, wherein said polyacrylic acid or acrylic polymer is selected from the class of methacrylic acid, methylacrylate, methylmethacrylate, ethyl acrylate, propyl acrylate, butyl acrylate, ethyl methylmethacrylate, propyl methacrylate, butyl methacrylate, 2-ethylhexyl acrylate, 2-hydroxyethylacrylate, 2-hydroxybutyl methacrylate, 2-ethylhexyl methacrylate, 2-hydroxy ethyl methacrylate, acrylamide, and mixtures of these.

5. The method of claim 1, further including an antioxidant, said antioxidant is selected from the class consisting of amines, phenols, phosphites, sulfides, and metal salts.

6. The method of claim 5, wherein said antioxidant is butylated hydroxylanisole (BNA), or butylated hydroxyl toluene (BHT).

## Patentansprüche

1. Ein Verfahren zum Herstellen eines Verdickungsmittels, das folgende Schritte aufweist: Zusammenmischen von pflanzlichem Öl und Polyacrylsäure, um eine Vormischung zu bilden und Hindurchperlenlassen von dampfförmigem Ammoniak durch die Vormischung.

2. Das Verfahren gemäß Anspruch 1, bei dem die Vormischung ferner ein Antioxidationsmittel enthält.

3. Das Verfahren gemäß Anspruch 1, bei dem das pflanzliche Öl aus der Gruppe ausgewählt ist, die aus Baumwollsamen-, Leinsamen-, Mais-, Kokosnuss-, Babassu-, Oliven-, Tung-, Erdnuss-, Saflor-, Sonnenblumen-, Perilla-, Oiticica-, Palm-, Canola-, Sojabohnenöl und einer Mischung dieser besteht.

4. Das Verfahren gemäß Anspruch 1, bei dem die Polyacrylsäure oder das Acrylpolymer aus der Klasse von Methacrylsäure, Methylacrylat, Methylmethacrylat, Ethylacrylat, Propylacrylat, Butylacrylat, Ethylmethylmethacrylat, Propylmethacrylat, Butylmethacrylat, 2-Ethylhexylacrylat, 2-Hydroxyethylacrylat, 2-Hydroxybutylmethacrylat, 2-Ethylhexylmethacrylat, 2-Hydroxyethylmethacrylat, Acrylamid und Mischungen dieser ausgewählt ist.

5. Das Verfahren gemäß Anspruch 1, das ferner ein Antioxidationsmittel umfasst, wobei das Antioxidationsmittel aus der Klasse ausgewählt ist, die aus Aminen, Phenolen, Phosphiten, Sulfiden und Metallsalzen besteht.

6. Das Verfahren gemäß Anspruch 5, bei dem das Antioxidationsmittel Butylhydroxylanisol (BNA) oder Butylhydroxyltoluen (BHT) ist.

## Revendications

1. Procédé de préparation d'un épaississant, comprenant : mélanger de l'huile végétale et de l'acide polyacrylique l'un avec l'autre, pour former un prémélange et faire barboter de l'ammoniac vaporeux à travers ledit prémélange.

2. Procédé selon la revendication 1, dans lequel ledit prémélange contient également un antioxydant.

3. Procédé selon la revendication 1, dans lequel ladite huile végétale est choisie parmi le groupe composé des huiles de semence de coton, de lin, de mais, de coco, de babassu, d'olive, de tung, d'arachide, de carthame, de tournesol, de périlla, d'oïticica, de palme, de canola, de soja, et un mélange de ces dernières.

4. Procédé selon la revendication 1, dans lequel ledit acide polyacrylique ou le polymère acrylique est choisi parmi la classe d'acide méthacrylique, de méthylacrylate, de méthylméthacrylate, d'acrylate d'éthyle, d'acrylate de propyle, d'acrylate de butyle, de méthacrylate d'éthyle-méthyle, de méthacrylate de propyle, de méthacrylate de butyle, d'acrylate de 2-éthylhexyle, de 2-hydroxyéthylacrylate, de méthacrylate de 2-hydroxybutyle, de méthacrylate de 2-éthylhexyle, de méthacrylate de 2-hydroxyéthyle, d'acrylamide, et de mélanges de ceux-ci.

5. Procédé selon la revendication 1, comportant, par ailleurs, un antioxydant, ledit antioxydant étant choisi parmi la classe composée d'amines, de phénols, de phosphites, de sulfures et de sels de métaux.

6. Procédé selon la revendication 5, dans lequel ledit antioxydant est de l'hydroxylanisole butylé (BNA) ou de l'hydroxyltoluène butylé (BHT).
